# EUROPÄISCHE PATENTSCHRIFT

(11) **EP 0 853 727 B1**
(45) Veröffentlichungstag und Bekanntmachung des Hinweises auf die Patenterteilung: **28.02.2001**
(21) Anmeldenummer: 96927674.0
(22) Anmeldetag: 03.08.1996
(51) Int. Cl.: F04B 17/03, F04B 53/16, H02K 7/14, B60T 8/40, B60T 8/36

(54) **ELEKTROMOTOR-PUMPEN-AGGREGAT**
ELECTRIC MOTOR-PUMP ASSEMBLY
ENSEMBLE POMPE ET MOTEUR ELECTRIQUE

(30) Priorität: 30.09.1995 DE 19536696
(43) Veröffentlichungstag der Anmeldung: 22.07.1998
(73) Patentinhaber: Continental Teves AG & Co. oHG, 60488 Frankfurt (DE)
(72) Erfinder: REINARTZ, Hans-Dieter, D-60439 Frankfurt am Main (DE); DINKEL, Dieter, D-65817 Eppstein (DE)
(86) Internationale Anmeldenummer: EP9603433
(87) Internationale Veröffentlichungsnummer: WO9713067

(56) Entgegenhaltungen:
- EP-A- 0 358 127
- EP-A- 0 509 883
- DE-A- 3 438 680
- DE-A- 3 701 857
- DE-A- 3 839 689
- DE-A- 4 120 665
- DE-A- 4 315 826
- DE-A- 4 338 896

## Beschreibung

Die Erfindung bezieht sich auf einen Elektromotor mit einem zu einer Seite offenen Gehäuse in dessen Symmetrieachse eine Motorwelle angeordnet ist, sowie mit einer Pumpe, die in einem bezogen auf die Motorwelle in radialer Richtung ausgedehntem Gehäuse angeordnet ist, in dem Kanäle zur Führung von Pumpenkolben ausgebildet sind.

Aus der DE 43 158 26 A1 ist ein derartiges Aggregat bekannt, bei dem das Pumpengehäuse eine erste dem Elektromotor zugewandte Grundfläche und eine zweite dem Elektromotor abgewandte Grundfläche aufweist, die sich jeweils bezogen auf die Motorwelle in radialer Richtung erstrecken. Zur Bildung des Motor-Pumpen-Aggregats wird das Elektromotorgehäuse mit seiner offenen Seite auf das Pumpengehäuse aufgesetzt und an der Grundseite mit dem Pumpengehäuse verbunden.

Das Pumpengehäuse ragt dabei in radialer Richtung über den Umfang des Elektromotorgehäuses hinaus.

Aus der EP-A-509 883 ist ein weiters Elektromotor-Pumpen-Aggregat bekannt, daß aus einem Elektromotor, einer Pumpe und einem Ventilgehäuse zusammengesetzt ist. Das Pumpengehäuse ist aus Kunststoff ausgeführt und dient als Verschlußdeckel des Motorgehäuses.

Die Erfindung beruht daher auf der Aufgabe, ein leicht zusammensetzbares Elektromotor-Pumpen-Aggregat zu schaffen, das darüber hinaus eine möglichst geringe radiale Ausdehnung aufweisen soll.

Dazu schlägt die Erfindung vor, daß der Wandbereich eines topfförmigen Elektromotorgehäuses derart in axialer Richtung verlängert ist, daß es das Pumpengehäuse am Außenumfang umfaßt.

Dabei kommen die Achsen der Kanäle zur Führung der Pumpenkolben innerhalb des Elektromotorgehäuses zu liegen.

Diese Anordnung hat darüber hinaus den Vorteil, daß die Pumpenkanäle, die in die Seitenwand des Pumpengehäuses einmünden, nicht aufwendig verschlossen werden müssen. Es reicht wenn ein Stopfen eingesetzt wird, der von der Topfwand des Elektromotorgehäuses gehalten wird.

Im Pumpengehäuse ist ein zentraler Durchbruch vorgesehen, in den die Pumpenkanäle einmünden, wobei sich innerhalb des Durchbruchs ein exzentrisch ausgebildeter Bereich der Motorwelle befindet.

Das Elektromotorgehäuse wird üblicherweise aus Metall gefertigt, da es den magnetischen Rückschluß der Magnetfelder der Permanentmagnete des Stators sicherstellen soll.

Da das Elektromotorgehäuse das Pumpengehäuse umfaßt, kann dieses aus Kunststoff hergestellt werden, da die Umfassung dem Pumpengehäuse eine ausreichende Stabilität verleiht.

Die Ausbildung des Pumpengehäuses in Kunststoff hat darüber hinaus den Vorteil, daß an der ersten Grundfläche die Bürsten des Elektromotors aufgesetzt werden können, so daß das Pumpengehäuse gleichzeitig als Bürstentrageplatte fungiert.

Darüber hinaus können im Pumpengehäuse Leiterbahnen eingegossen werden, mit denen die Stromzuführung zu den Bürsten realisiert wird.

Aus der zweiten Grundfläche des Pumpengehäuses ragen Anschlußzapfen hervor, deren Anschlußkanäle senkrecht in die Pumpenkanäle einmünden. Die Anschlußzapfen werden in einem Ventilgehäuse aus Aluminium eingesteckt, wobei in dem Aluminiumgehäuse Kanäle ausgebildet sind, die unter anderem auch die Saug- und Druckventile der Pumpen beinhalten.

Die Erläuterung der Erfindung erfolgt im folgenden anhand von drei Figuren.

Dabei zeigt die
- Figur 1: einen Querschnitt durch eine erste Ausführungsform des Aggregats, die
- Figur 2: einen Querschnitt durch eine zweite Ausführungsform des Aggregats und die
- Figur 3: eine perspektivische Darstellung eines Ventilblocks.

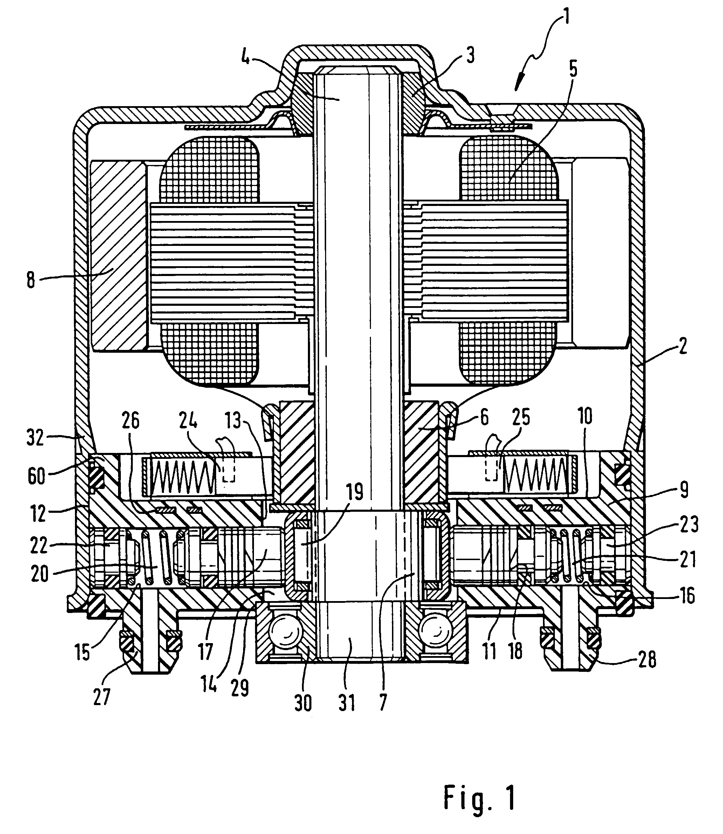

Zunächst soll auf die Figur 1 Bezug genommen werden.

Bei dem Elektromotor 1 handelt es sich um einen Gleichstromkommutatormotor. Sein Gehäuse 2 besteht aus einem tiefgezogenen Blechtopf, der zu einer Seite hin offen ist. Im Boden des Gehäuses ist eine erste Lagerstelle 3 für eine Motorwelle 4 vorgesehen, die sich in der Synmetrieachse des Gehäuses 2 befindet. Die Motorwelle 4 trägt einen Anker 5, einen Kollektor 6 sowie einen Exzenter 7, der auf die glatt durchgeschliffene Welle 4 aufgepreßt ist. An der Innenseite der Gehäusewand sind Permanentmagnete 8 befestigt bzw. aufgeklebt, die in Wechselwirkung mit dem stromdurchflutenden Anker 5 eine Drehbewegung der Welle 4 hervorrufen.

Die Permanentmagnete 8 sowie der Anker 5 sind nahe des Bodens des Elektromotorgehäuses 2 angeordnet.

Die offene Seite des Gehäusetopfes des Elektromotors wird durch das Pumpengehäuse 9 begrenzt. Dabei handelt es sich um eine verdickte Scheibe, deren erste Grundfläche 10 dem Elektromotor zugewandt ist, während ihre zweite Grundfläche 11 nach außen weist und in etwa mit dem Rand des Gehäusetopfes 2 abschließt.

Die Außenwand 12 des Pumpengehäuses 9 hat die Form eines Zylinders, dessen Durchmesser den Innendurchmesser des Gehäusetopfes 2 entspricht. Das Pumpengehäuse 9 kann somit passend in die offene Seite des Gehäusetopfes 2 eingesetzt werden. Im Zentrum des Pumpengehäuses 9 befindet sich eine Vertiefung 13 in der sich der Exzenter 7 der Welle 4 befindet. In der Ausführung nach Figur 1 ist die Vertiefung 13 als zentraler Durchbruch 14 ausgebildet.

Im Pumpengehäuse 9 verlaufen mindestens zwei Pumpenkanäle 15,16 jeweils in radialer Richtung, wobei das jeweils eine Ende eines Kanals in die Vertiefung 13 und das jeweils andere Ende eines Kanals in der Außenwand 12 enden.

In den Kanälen 15,16 sind Pumpenkolben 17,18 geführt, die mit ihren innenliegenden Stirnflächen über eine Lagerung am Exzenter 7 der Welle 4 anliegen. Die äußeren Stirnflächen der Pumpenkolben 17,18 begrenzen jeweils einen Pumpenraum 20,21, der nach außen hin jeweils durch einen Stopfen 22,23 begrenzt wird. Die Außenstirnfläche der Stopfen 22,23 liegen an der Innenwand des Gehäusetopfes 2 an. Dies bedeutet, daß für diese Stopfen 22,23 keine weiteren Befestigungen im Pumpengehäuse 9 vorgesehen werden brauchen.

Das Pumpengehäuse 9 ist aus Kunststoff hergestellt. Dies ermöglicht es, die Bürsten 24,25 des Elektromotor 1 bzw. deren Köcher unmittelbar auf die erste Grundfläche 10 des Pumpengehäuses 9 zu befestigen. Das Pumpengehäuse hat damit auch die Funktion einer Bürstentrageplatte.

Die Stromversorgung der Bürsten 24,25 erfolgt über Leiterbahnen 26, die in das Pumpengehäuse 9 eingegossen werden. Die Leiterbahnen 26 befinden sich in einer Ebene zwischen der ersten Grundfläche 10 und den Pumpenkanälen 15,16.

Aus der zweiten Grundfläche 11 erheben sich zwei Anschlußzapfen 27,28 mit jeweils einer zentralen Bohrung, die in die Pumpenkammern 20,21 einmünden.

Die Anschlußzapfen 27,28 ragen über den Randbereich des Gehäusetopfes 2 hinaus und sind daher geeignet in entsprechende Aufnehmungen eines Ventilblocks eingesteckt zu werden.

Wie schon erwähnt, ist die Vertiefung 13 als zentraler Durchbruch 14 ausgebildet, der an seinem Ende, das in die zweite Grundfläche einmündet, stufig erweitert ist (Stufe 29), in die über eine Teillänge ein Außenring eines Kugellagers 30 eingesteckt werden kann. Der Innenring des Kugellagers 30 ist auf einen Endzapfen 31 der Welle 4 aufgesteckt.

Das Kugellager 30 ragt somit auch über der Grundfläche hervor und ist geeignet, in eine entsprechende Aufnehmung eines Ventilgehäuses eingesteckt zu werden.

Um das Pumpengehäuse 9 in axialer Richtung fixieren zu können, sind im Gehäusetopf 2 ein oder mehrere Eindrückungen 32 vorgesehen, die einen Anschlag für das Pumpengehäuse 9 bilden.

Damit das Pumpengehäuse 9 möglichst kippsicher im Gehäusetopf 2 einsteckbar ist, weist es an seinem Außenrand eine nach innen weisende umlaufende Erhebung 60 auf, deren Höhe in etwa der Höhe der Bürsten 24 entspricht und deren Außendurchmesser dem Innendurchmesser des Gehäusetopfes 2 entspricht. Auf diese Weise wird die axiale Baulänge verkürzt.

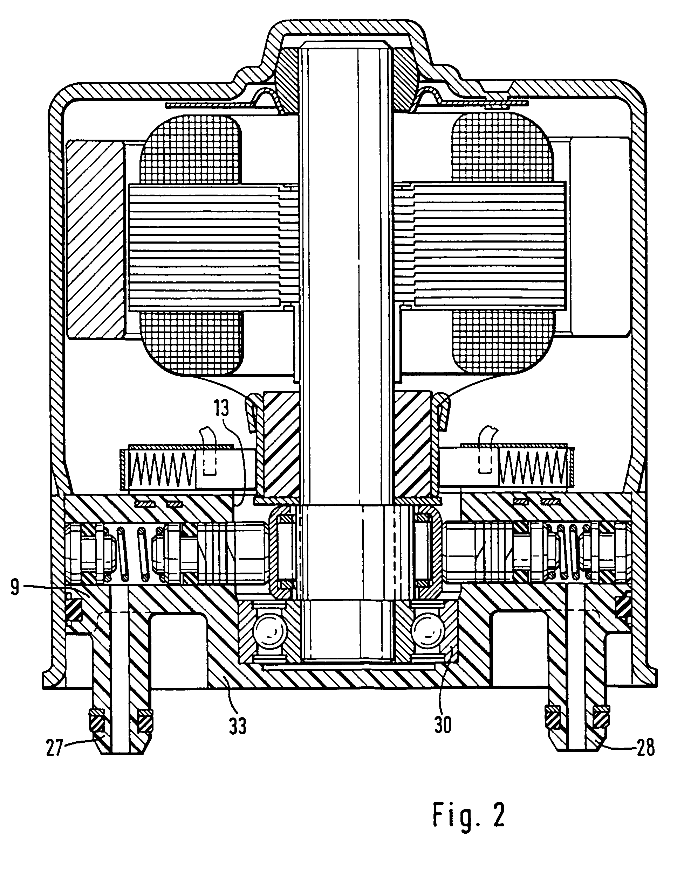

Die Figur 2 zeigt eine Abwandlung der Ausführung nach Figur 1, die Vertiefung 13 ist nicht als Durchbruch ausgebildet, sondern durch ein einstückig mit dem Pumpengehäuse 9 ausgebildeten Lagertopf 33 nach außen verschlossen. Der Topf hält in seinem Inneren das Kugellager 30.

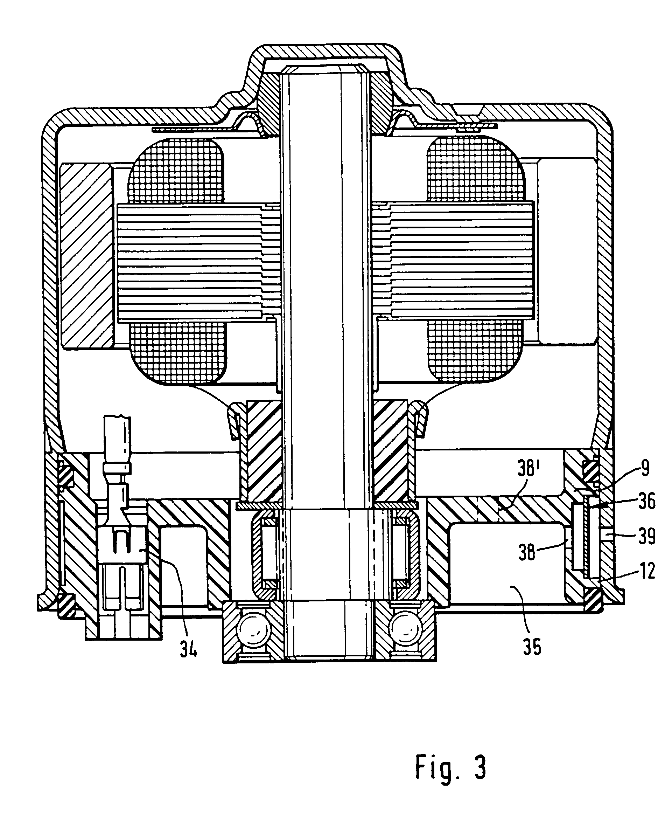

Die Figur 3 zeigt einen gegenüber der Schnittfläche der Figur 1 verdrehte Ansicht und zwar in etwa senkrecht zur Achse der Pumpenkanäle. Diese sind daher nicht sichtbar. Man erkennt, daß das Pumpengehäuse 9 soweit dies möglich ist, Ausnehmungen 35 aufweist, die der Materialersparnis dienen sollen. Außerdem erkennt man, daß im Pumpengehäuse 9 ein integrierter Motorstecker 34 vorgesehen ist, der sich in axialer Richtung durch das Pumpengehäuse erstreckt und auf seiner innen liegenden Seite die Leiterbahnen 26 kontaktiert. In der Verlängerung des Motorsteckers ist im noch zu beschreibenden Ventilgehäuse ein Kanal vorgesehen, durch den die Zuleitungen zum Motorstecker verlaufen, und mit dem der Motor mit einer Steuerung, die auf der anderen Seite des Ventilgehäuses angebracht, verbunden ist.

Zur Belüftung des Motorinnenraumes ist eine Belüftungsmembran 36 vorgesehen, die in einer Vertiefung in der Außenwand 12 des Pumpengehäuses 9 eingesetzt ist. Diese Vertiefung 36 steht über einen Kanal 38 mit den Ausnehmungen 35 in Verbindung. Die Ausnehmung 35 widerum stehen über einen weiteren Kanal 38', der in der Figur 3 gestrichelt angedeutet ist, weil der nicht unbedingt in der gezeigten Ebene angebracht sein muß, mit dem Motorinnenraum in Verbindung.

Die Vertiefung steht widerum über eine Bohrung 39 in der Wand des Gehäusetopfes 2, die ebenfalls nicht in der gezeigten Ebene angesetzt sein muß, mit der Außenluft in Verbindung.

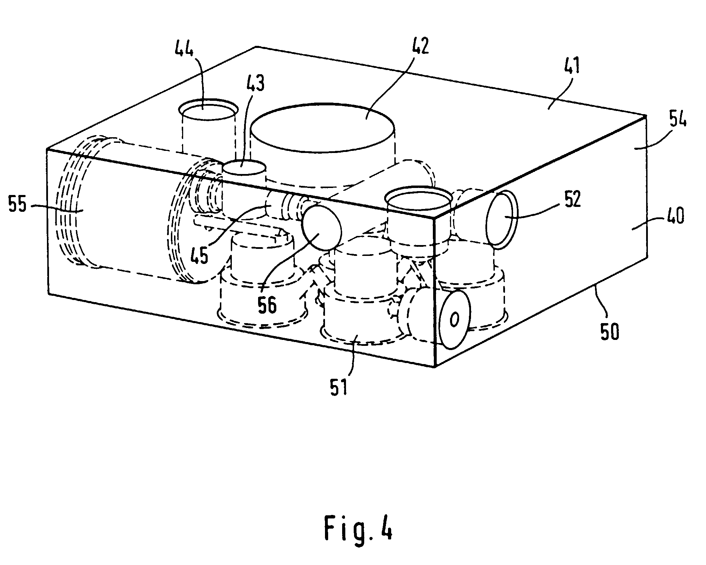

Wie schon mehrfach erwähnt ist das Pumpengehäuse 9 so ausgebildet, daß es auf einen Ventilblock 40 aufsteckbar ist. Ein solcher Ventilblock 40 ist in der Figur 4 perspektivisch dargestellt. Er besteht aus einem quaderförmigen Aluminiumblock, der mit seiner ersten Grundfläche 41 das Pumpengehäuse 9 kontaktiert. Daher ist eine zentrale Aufnahme 42 für das Kugellager 30 vorgesehen. Der Durchmesser dieser Ausnehmung 42 entspricht dem Außendurchmesser des Kugellagers 30. Im Abstand dazu ist eine erste Zapfenaufnahme 43 vorgesehen, in der ein Anschlußzapfen 27 eingesteckt werden kann. Diametral zur Aufnahme 43 ist eine weitere Zapfenaufnahme vorgesehen, die hier der übersichtlichkeitshalber nicht dargestellt ist. Um 90° versetzt gegenüber den Zapfenaufnahmen 43 ist eine Steckeraufnahme 44 vorgesehen, in der der Motorstecker 34 eingeführt werden kann, und durch die der Gegenstecker hindurch verläuft. Die Zapfenaufnahme 43 wird von einem Querkanal 45 durchstoßen, der mehrfach gestuft ist. Die Stufen dienen dazu, um Patronen mit Rückschlagventilen aufzunehmen, die die Saug- und Druckventile für die Pumpen bilden.

Der ersten Grundfläche 41 gegenüber liegt eine zweite Grundfläche 50, die mehrere Ventilaufnahmen 51 aufweist. Hier sind Ventilpatronen einsteckbar, mit denen die Druckmittelzufuhr von der Pumpe zu angeschlossenen Elementen gesteuert wird.

Da die beschriebene Anlage vorzugsweise in einer Bremsanlage eingesetzt werden soll, werden an dem Ventilblock einerseits Radbremsen an Radbremsanschlüssen 52 an einer Seitenwand 54 des Quaders angeschlossen, andererseits einen Hauptzylinder der über einen Anschluß in der ersten Grundseite 41 verfügt.

Weitere Elemente sind ein Niederdruckspeicher 55 sowie eine Dämpfungskammer 56. Die Dämpfungskammer ist in einer Bohrung ausgebildet, die in eine Seitenfläche des Quaders mündet, die Seitenfläche mit den Radbremsanschlüssen gegenüberliegt.

Die Aufnahmebohrung für den Niederdruckspeicher 55 verläuft quer zur Aufnahmebohrung für die Dämpfungskammer 56 und parallel zu den Grundflächen.

### Bezugszeichenliste

- 1: Elektromotor
- 2: Gehäusetopf
- 3: erstes Lager
- 4: Motorwelle
- 5: Anker
- 6: Kollektor
- 7: Exzenter
- 8: Permanentmagnete
- 9: Pumpengehäuse
- 10: erste Grundfläche
- 11: zweite Grundfläche
- 12: Außenwand
- 13: Vertiefung
- 14: Durchbruch
- 15: Pumpenkanal
- 16: Pumpenkanal
- 17: Pumpenkolben
- 18: Pumpenkolben
- 19: Nadellager
- 20: Pumpenraum
- 21: Pumpenraum
- 22: Stopfen
- 23: Stopfen
- 24: Bürsten
- 25: Bürsten
- 26: Leiterbahn
- 27: Anschlußzapfen
- 28: Anschlußzapfen
- 29: Stufe
- 30: Kugellager
- 31: Endzapfen
- 32: Eindrückungen
- 33: Lagertopf
- 34: Motorstecker
- 35: Ausnehmung
- 36: Belüftungsmembran
- 37: Ausnehmung
- 38: Kanal
- 38': Kanal
- 39: Bohrung
- 40: Ventilblock
- 41: erste Grundfläche
- 42: Kugellageraufnahme
- 43: Zapfenaufnahme
- 44: Steckeraufnahme
- 45: Querbohrung
- 50: zweite Grundfläche
- 51: Ventilaufnahme
- 52: Radbremsanschlüsse
- 53: Hauptzylinderanschluß
- 55: Niederdruckspeicher
- 56: Dämpfungskammer
- 60: Erhebung

## Patentansprüche

1. Elektromotor-Pumpen-Aggregat mit einem Elektromotor (1) der in einem zu einer Seite hin offenen, Gehäuse angeordnet ist, wobei die Motorwelle in der Symmetrieachse des Gehäuses verläuft, mit einer Pumpe, die in einer in radialer Richtung ausgedehnten Pumpengehäuse (9) ausgebildet ist, wobei das Pumpengehäuse (9) mit Pumpenkanälen (15,16) zur Führung von Pumpenkolben (17,18) versehen ist, dadurch **gekennzeichnet**, daß das Gehäuse als Topf ausgebildet ist und der Wandbereich des Gehäusetopfes (2) des Elektromotors (1) das Pumpengehäuse (9) am Außenumfang umfaßt.

2. Aggregat nach Anspruch 1, dadurch **gekennzeichnet**, daß die Achsen der Pumpenkanäle (15,16) innerhalb des Gehäusetopfes (2) verlaufen.

3. Aggregat nach Anspruch 2, dadurch **gekennzeichnet**, daß die Pumpenkanäle (15,16) in die Seitenwand (12) des Pumpengehäuses (9) einmünden.

4. Aggregat nach Anspruch 3, dadurch **gekennzeichnet**, daß die Pumpenkanäle (15,16) durch Stopfen verschlossen sind, die an der Innenseite des Gehäusetopfes (2) anliegen.

5. Aggregat nach Anspruch 1, dadurch **gekennzeichnet**, daß eine Vertiefung (16) im Gehäuse (9) vorgesehen ist, in der die Pumpenkanäle (15,16) einmünden, und in dessen Bereich ein an der Motorwelle (4) ausgebildeter Exzenter (7) vorgesehen ist.

6. Aggregat nach einem der vorhergehenden Ansprüche, dadurch **gekennzeichnet**, daß das Pumpengehäuse (9) aus Kunststoff gefertigt ist.

7. Aggregat nach Anspruch 6, dadurch **gekennzeichnet**, daß die Bürsten (24,25) des Elektromotors (1) auf dem Kunstoffgehäuse (9) aufgesetzt sind.

8. Aggregat nach Anspruch 7, dadurch **gekennzeichnet**, daß die Leiterbahnen (26) zur Stromversorgung der Bürsten im Pumpengehäuse (9) verlaufen.

9. Aggregat nach einem der vorhergehenden Ansprüche, dadurch **gekennzeichnet**, daß an der Außenfläche des Pumpengehäuses (9) Anschlußzapfen hervorstehen, deren zentrale Durchbrüche mit den Pumpenkanälen (15,16) verbunden sind.

10. Aggregat nach einem der vorangegangenen Ansprüche, dadurch **gekennzeichnet**, daß Rückschlagventile, die die Saug- und Druckventile der Pumpe bilden, außerhalb des Pumpengehäuses (9) angebracht sind.

11. Aggregat nach Anspruch 10, dadurch **gekennzeichnet**, daß die Ventile in einem Ventilgehäuse angeordnet sind, wobei das Pumpengehäuse über Anschlußzapfen verfügt, die in einem Ventilgehäuse einsteckbar sind.

## Claims

1. Electric motor and pump assembly which includes an electric motor (1) accommodated in a housing that is open on one side, wherein a motor shaft extends in the axis of symmetry of the housing, and a pump which is accommodated in a pump housing (9) that extends in a radial direction, with the pump housing (9) having pump ducts (15, 16) for guiding pump pistons (17, 18),
**characterized** in that the housing is configured as a bowl and the wall portion of the bowl-shaped housing (2) of the electric motor (1) embraces the pump housing (9) on the outside periphery.

2. Assembly as claimed in claim 1,
**characterized** in that the axes of the pump ducts (15, 16) extend within the housing bowl (2).

3. Assembly as claimed in claim 2,
**characterized** in that the pump ducts (15, 16) open into the side wall (12) of the pump housing (9).

4. Assembly as claimed in claim 3,
**characterized** in that the pump ducts (15, 16) are closed by plugs which abut on the inside of the housing bowl (2).

5. Assembly as claimed in claim 1,
**characterized** in that an aperture (16) is included in the housing (9) into which the pump ducts (15, 16) open and in the area of which an eccentric (7) provided on the motor shaft (4) is arranged.

6. Assembly as claimed in any one of the preceding claims,
**characterized** in that the pump housing (9) is made of plastic material.

7. Assembly as claimed in claim 6,
**characterized** in that the brushes (24, 25) of the electric motor (1) are mounted on the plastic housing (9).

8. Assembly as claimed in claim 7,
**characterized** in that the conductor paths (26) for the current supply of the brushes extend in the pump housing (9).

9. Assembly as claimed in any one of the preceding claims,
**characterized** in that connecting pins project from the outside surface of the pump housing (9) and include central apertures which are connected to the pump ducts (15, 16).

10. Assembly as claimed in any one of the preceding claims,
**characterized** in that the non-return valves which provide the suction and pressure valves of the pump are mounted outside the pump housing (9).

11. Assembly as claimed in claim 10,
**characterized** in that the valves are accommodated in a valve housing, with the pump housing having connecting pins which can be inserted into a valve housing.

## Revendications

1. Ensemble pompe et moteur électrique, avec un moteur électrique (1) qui est disposé dans un boîtier ouvert vers un côté, l'arbre de moteur s'étendant dans l'axe de symétrie du boîtier, et avec une pompe qui est configurée dans un carter de pompe (9) s'étendant en direction radiale, le carter de pompe (9) étant doté de canaux de pompe (15, 16) pour le guidage de pistons de pompe (17, 18), **caractérisé** en ce que le boîtier est réalisé en forme de pot, et la région de paroi du pot de boîtier (2) du moteur électrique (1) entoure le carter de pompe (9) sur sa périphérie extérieure.

2. Ensemble selon la revendication 1, **caractérisé** en ce que les axes des canaux de pompe (15, 16) s'étendent à l'intérieur du pot de boîtier (2).

3. Ensemble selon la revendication 2, **caractérisé** en ce que les canaux de pompe (15, 16) débouchent dans la paroi latérale (12) du carter de pompe (9).

4. Ensemble selon la revendication 3, **caractérisé** en ce que les canaux de pompe (15, 16) sont fermés par des bouchons qui s'appliquent contre le côté intérieur du pot de boîtier (2).

5. Ensemble selon la revendication 1, **caractérisé** en ce qu'un renfoncement (16) est prévu dans le carter (9), renfoncement dans lequel débouchent les canaux de pompe (15, 16) et dans la région duquel est prévu un excentrique (7) configuré sur l'arbre de moteur (4).

6. Ensemble selon l'une quelconque des revendications précédentes, **caractérisé** en ce que le carter de pompe (9) est réalisé en matière plastique.

7. Ensemble selon la revendication 6, **caractérisé** en ce que les balais (24, 25) du moteur électrique (1) sont montés sur le carter (9) en matière plastique.

8. Ensemble selon la revendication 7, **caractérisé** en ce que les pistes conductrices (26) pour l'alimentation électrique des balais s'étendent dans le carter de pompe (9).

9. Ensemble selon l'une quelconque des revendications précédentes, **caractérisé** en ce que des tenons de raccordement, dont les percements centraux sont reliés aux canaux de pompe (15, 16), dépassent de la face extérieure du carter de pompe (9).

10. Ensemble selon l'une quelconque des revendications précédentes, **caractérisé** en ce que des soupapes de non retour, qui constituent les soupapes d'aspiration et de refoulement de la pompe, sont installées en dehors du carter de pompe (9).

11. Ensemble selon la revendication 10, **caractérisé** en ce que les soupapes sont disposées dans un boîtier de soupapes, le carter de pompe disposant de tenons de raccordement qui peuvent être emboîtés dans le boîtier de soupapes.
